# DEMANDE DE BREVET EUROPEEN

(11) **EP 4 852 242 A1**
(43) Date de publication de la demande: **09.12.2026**
(21) Numéro de dépôt: 25305808.5
(22) Date de dépôt: 03.06.2025
(51) Int. Cl.: H02B 1/056, H02B 1/06, H02B 1/21, H02B 1/32

(54) **DISPOSITIF DE DISTRIBUTION DE COURANT ÉLECTRIQUE, ENSEMBLE DE DISTRIBUTION ET ARMOIRE ÉLECTRIQUE ASSOCIÉS**

(71) Demandeur: SCHNEIDER ELECTRIC INDUSTRIES SAS, 92500 Rueil-Malmaison (FR)
(72) Inventeur: BADIN, Didier, 92500 RUEIL MALMAISON (FR); CARMENTRAN, Damien, 92500 RUEIL MALMAISON (FR); LINARES, Louis, 92500 RUEIL MALMAISON (FR); AUGER, Pascal, 78180 MONTIGNY-LE-BRETONNEUX (FR); BON, Didier, 92500 RUEIL MALMAISON (FR)
(74) Mandataire: Lavoix

(57) **Abrégé**

La présente invention concerne un dispositif de distribution de courant électrique (30), configuré pour être connecté électriquement à au moins une barre d'alimentation de phase, comprenant :
- un support arrière principal (31a);
- un support avant (33);
- un bus de puissance, comprenant au moins une barre de phase insérée dans le support arrière principal (31a) et recouverte par le support avant (33).
- Le dispositif de distribution (30) comprend au moins un connecteur de phase (52P), fixé à la, ou avec respectivement l'une des, barre(s) de phase, configuré pour être en contact direct avec la, ou avec respectivement l'une des barre(s) d'alimentation de phase, pour connecter électriquement la ou chaque barre de phase à la ou l'une des barre(s) d'alimentation de phase,
et le dispositif de distribution (30) est configuré pour qu'un dispositif de protection électrique soit monté sur le dispositif de distribution (30).

## Description

La présente invention concerne un dispositif de distribution de courant électrique, un ensemble de distribution et une armoire électrique associés.

Pour connecter électriquement un dispositif de distribution de courant électrique, comprenant un jeu de barres, à des barres d'alimentation, par exemple dans les armoires ou tableaux électriques, il est connu d'ajouter sur le dispositif de distribution un boîtier de raccordement. Des dispositifs de protection électrique sont ensuite fixés sur le dispositif de distribution, et connectés électriquement au jeu de barres. Cependant, la présence du boîtier de raccordement diminue l'espace disponible pour fixer les dispositifs de protection électrique.

Il est également connu de connecter directement le dispositif de distribution aux barres d'alimentation. Dans ce cas, les dispositifs de protection ne sont pas fixés sur le dispositif de distribution, mais sur un support annexe, ce qui diminue l'espace disponible à l'intérieur de l'armoire électrique, et les dispositifs de protection sont connectés électriquement au dispositif de distribution via des câbles. L'utilisation de câbles pour connecter les dispositifs de protection électrique au dispositif de distribution rend l'installation des dispositifs de protection électrique longue et complexe.

Le but de l'invention est alors de proposer un dispositif de distribution permettant de limiter le nombre de pièces utilisées et de limiter l'espace occupé par le dispositif de distribution et les dispositifs de protection électrique, tout en assurant une connexion électrique facile entre le dispositif de distribution et les barres d'alimentation.

A cet effet, l'invention a pour objet un dispositif de distribution de courant électrique pour une armoire électrique, configuré pour être connecté électriquement à au moins une barre d'alimentation de phase, le dispositif de distribution comprenant :
- un support arrière principal;
- un support avant;
- un bus de puissance, comprenant au moins une barre de phase s'étendant selon une direction longitudinale, la ou chaque barre de phase étant insérée dans le support arrière principal et la ou chaque barre de phase étant recouverte par le support avant selon une direction de profondeur.

Selon l'invention, le dispositif de distribution comprend :
- au moins un connecteur de phase, le ou chaque connecteur de phase étant disposé selon une direction transversale, le ou chaque connecteur de phase étant fixé à la, ou avec respectivement l'une des, barre(s) de phase, le ou chaque connecteur de phase étant configuré pour être en contact direct avec la, ou avec respectivement l'une des, barre(s) d'alimentation de phase, pour connecter électriquement la ou chaque barre de phase à la ou l'une des barre(s) d'alimentation de phase.

Selon l'invention, le dispositif de distribution est configuré pour qu'un dispositif de protection électrique soit monté sur le dispositif de distribution et connecté directement à la ou l'une des barre(s) de phase pour connecter électriquement la ou l'une des barre(s) de phase au dispositif de protection électrique.

Grâce à l'invention, le dispositif de distribution de courant électrique est connecté directement à la, ou aux barre(s) d'alimentation, sans qu'il soit nécessaire d'ajouter un boîtier de raccordement sur le dispositif de distribution. Ainsi, l'espace disponible pour monter des dispositifs de protection électrique sur le dispositif de distribution est optimisé.

De plus, les dispositifs de protection électrique sont montés sur le dispositif de distribution lui-même. Ainsi, il n'est pas nécessaire de prévoir un support annexe pour installer les dispositifs de protection electrique. D'autre part, les dispositifs de protection électrique sont connectés directement à la barre ou aux barres du dispositif de distribution, ce qui évite une connexion par câbles, qui serait couteuse, complexe à mettre en œuvre et qui imposerait des contraintes de sécurité lors de l'installation et/ou de l'enlèvement de nouveaux dispositifs de protection. En effet, l'utilisation de câbles imposerait de couper l'alimentation électrique le temps de leur installation, ce qui n'est pas le cas lors de l'installation d'un système de protection électrique sur le dispositif de distribution de l'invention.

Suivant d'autres aspects avantageux de l'invention, dispositif de distribution comprend une ou plusieurs des caractéristiques suivantes, prises isolément ou suivant toutes les combinaisons techniquement possibles :
- Le dispositif de distribution est configuré pour être connecté électriquement à une pluralité de barres d'alimentation de phase et à une barre d'alimentation de neutre, et le bus de puissance comprend :
   - une pluralité de barres de phases et une barre de neutre, s'étendant selon la direction longitudinale, et disposées parallèlement les unes aux autres selon la direction transversale, et
   - une pluralité de connecteurs de phase et un connecteur de neutre, chaque connecteur étant disposé selon la direction transversale, chaque connecteur de phase étant fixé à l'une des barres de phase et le connecteur de neutre étant fixé à la barre de neutre, chaque connecteur de phase étant configuré pour être en contact direct avec l'une des barres d'alimentation de phase pour connecter électriquement chaque barre de phase à l'une des barres d'alimentation de phase, le connecteur de neutre étant configuré pour être maintenu en contact direct avec la barre d'alimentation de neutre, par exemple par une vis, pour connecter électriquement la barre de neutre à la barre d'alimentation de neutre.
- Chaque connecteur de phase comprend une pluralité de feuilles métalliques superposées les unes sur les autres selon la direction de profondeur.
- Chaque connecteur de phase comprend une partie principale recouverte d'une gaine isolante électriquement, une extrémité de connexion, dénudée, et une partie de jonction, dénudée, la partie de jonction reliant la partie principale et l'extrémité de connexion et comprenant un soyage, de sorte que l'extrémité de connexion et la partie principale sont décalées, selon la direction de profondeur, l'une par rapport à l'autre.
- Le support arrière principal comprend au moins une encoche, la ou chaque encoche étant traversée par le ou par l'un des connecteur(s) de phase, et au moins un logement, dans lequel sont reçus la partie principale, l'extrémité de connexion et la partie de jonction du ou de l'un des connecteur(s) de phase.
- Chaque logement comprend des griffes, s'étendant dans la direction de profondeur, et configurées pour retenir le ou chaque connecteur de phase dans la direction de profondeur.
- Le support arrière principal comprend au moins un fût de guidage s'étendant selon la direction de profondeur, le fût de guidage comprenant un orifice traversant, qui comprend une partie principale débouchant sur le ou l'un des connecteurs de phase, et dans lequel le dispositif de distribution comprend au moins une vis, comprenant une tête insérée dans la partie principale, et un corps traversant la partie principale et l'extrémité de connexion, afin de fixer l'extrémité de connexion à la barre d'alimentation de phase.
- Le support arrière principal comprend :
   - des supports arrière secondaires, disposés de part et d'autre du support arrière principal selon la direction longitudinale, la ou chaque barre de phase étant en outre insérée dans les supports arrière secondaires, et
   - deux garnitures, disposées de part et d'autre des supports arrière principal et secondaires selon la direction longitudinale de sorte à bloquer l'accès à la ou aux barres de phase parallèlement à la direction longitudinale.
- Le dispositif comprend deux supports latéraux, chaque support latéral étant fixé à l'une des garnitures par coopération de formes, les supports latéraux étant configurés pour être fixés sur un fond d'un coffre d'une armoire électrique

L'invention concerne également un ensemble de distribution comprenant un dispositif de distribution de courant électrique ainsi que décrit précédemment et au moins un dispositif de protection électrique, monté sur le dispositif de distribution de courant électrique et connecté directement à la ou l'une des barre(s) de phase, pour connecter électriquement la ou l'une des barre(s) d'alimentation de phase au dispositif de protection électrique.

L'invention concerne également une armoire électrique comprenant :
- un coffre délimitant une enceinte et présentant un fond ;
- au moins une barre d'alimentation de phase, s'étendant dans l'enceinte, selon une direction de hauteur de l'armoire électrique ; et
- un ensemble de distribution ainsi que décrit précédemment, disposé dans l'enceinte et fixé sur le fond, le ou chaque connecteur de phase étant en contact direct avec la ou avec respectivement l'une des barre(s) d'alimentation de phase, pour connecter électriquement la ou chaque barre de phase à la ou l'une des barre(s) d'alimentation de phase.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en perspective d'une armoire électrique selon l'invention ;

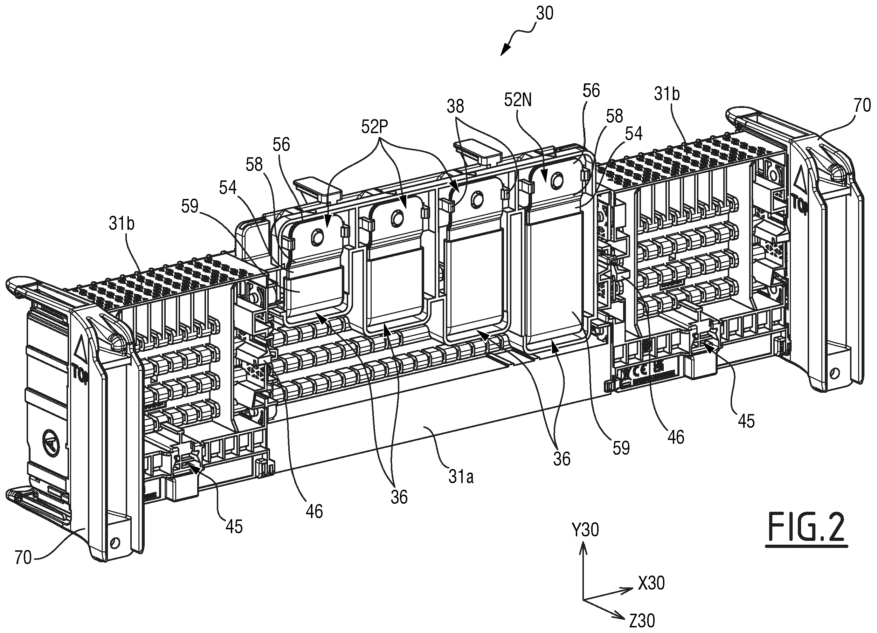

[Fig. 2] la figure 2 est une vue en perspective de l'ensemble de distribution de la figure 1 selon un autre angle ;
[Fig. 3] la figure 3 est une coupe selon le plan III du dispositif de la figure 1 ; et
[Fig. 4] la figure 4 est une coupe selon la plan IV du dispositif de la figure 1, montrant une garniture et un support latéral.

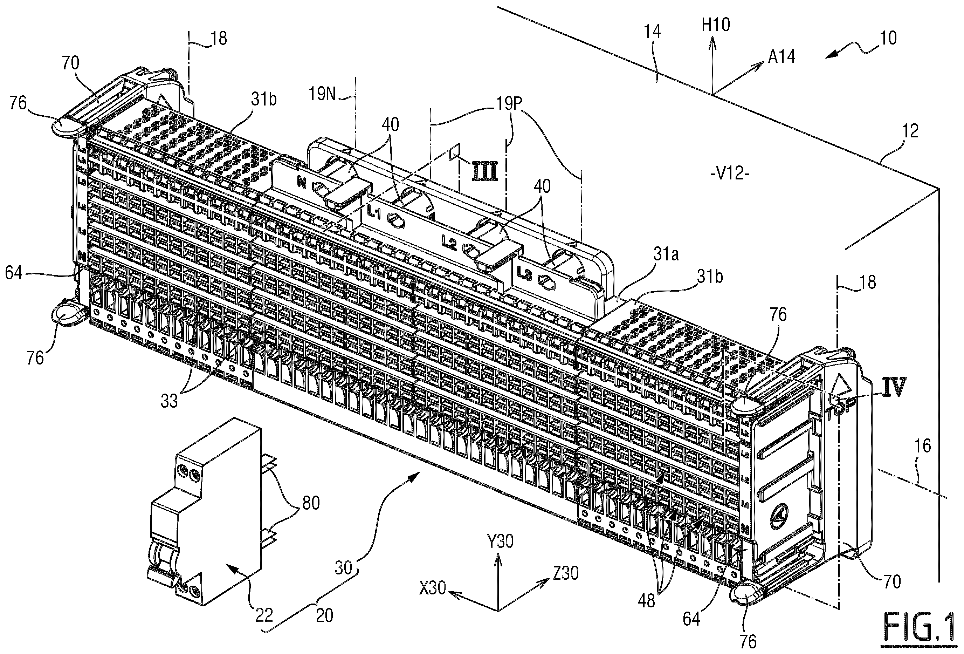

Une armoire électrique 10, conforme à l'invention, est représentée à la figure 1. L'armoire électrique 10 comprend un coffre 12, qui délimite une enceinte V12 et qui présente un fond 14. Le fond 14 s'étend globalement dans un plan orthogonal à une direction de fond A14. L'enceinte V12 est avantageusement refermée par une porte, qui n'est pas représentée.

L'armoire électrique 10 comprend des rails de fixation 16 et 18, fixés sur le fond 14 du coffre 12, et un ensemble de distribution 20. L'ensemble de distribution 20 est fixé, ou monté sur les rails de fixation 16 et 18. Dans ce cas, l'ensemble de distribution 20 est fixé sur le fond 14 de manière indirecte.

En variante non représentée, l'ensemble de distribution 20 est directement fixé sur le fond 14 du coffre 12.

L'armoire électrique 10 est configurée pour distribuer de l'énergie électrique provenant d'une source de puissance à au moins une charge électrique, la source de puissance délivrant un courant avec au moins une phase. A cet effet, l'armoire électrique 10 comprend au moins une barre d'alimentation 19. Dans l'exemple illustré, la source de puissance est une source triphasée, délivrant un courant avec trois phases, et également un neutre. L'armoire électrique 10 comprend alors une pluralité de barres d'alimentation : trois barres d'alimentation de phase 19P et une barre d'alimentation de neutre 19N, qui s'étendent contre le fond 14. Les barres d'alimentation 19P et 19N s'étendent par exemple selon une direction de hauteur H10 de l'armoire 10, contre le fond 14. Lors du fonctionnement normal de l'armoire électrique, la direction de hauteur H10 est avantageusement verticale. En variante non représentée, les barres d'alimentation 19P et 19N s'étendent horizontalement.

L'ensemble de distribution 20 comprend au moins un dispositif de protection électrique 22, représenté schématiquement sur la figure 1 et un dispositif de distribution de courant électrique 30, aussi appelé simplement dispositif de distribution, par lequel l'ensemble de distribution 20 est fixé sur le fond 14. Le dispositif de protection électrique 22 est représenté à distance du dispositif de distribution 30, sur la figure 1, cependant lorsque l'ensemble de distribution 20 est en fonctionnement normal, le dispositif de protection électrique 22 est fixé sur le dispositif de distribution 30.

Le dispositif de distribution 30 présente une forme allongée, qui s'étend parallèlement à une direction longitudinale X30. Dans l'exemple de la figure 1, lorsque l'ensemble de distribution 20 est dans une configuration normale de fonctionnement, la direction longitudinale X30 est parallèle au fond 14, autrement dit orthogonale à la direction de fond A14. Selon un exemple, et ainsi que représenté à la figure 1, lorsque l'ensemble de distribution 20 est dans une configuration normale de fonctionnement, la direction longitudinale X30 est horizontale, et parallèle au rail 16 et orthogonale au rail 18.

En variante non représentée, les rails 16 et 18 sont parallèles et verticaux et, lorsque l'ensemble de distribution 20 est dans une configuration normale de fonctionnement, la direction longitudinale X30 est verticale.

On définit une direction transversale principale Y30 comme étant orthogonale à la fois à la direction de fond A14 et à la direction longitudinale X30, et une direction de profondeur Z30, comme étant orthogonale aux directions X30 et Y30, de sorte qu'un trièdre formé par les directions longitudinale X30, transversale Y30 et de profondeur Z30 soit un trièdre direct.

Le dispositif de distribution 30 comprend au moins un support arrière principal 31a, et un support avant 33. En pratique, le dispositif de distribution 30 comprend au moins un support arrière 31a dit « principal », et avantageusement, au moins un support arrière 31b dit « secondaire », alignés les uns par rapport aux autres selon la direction longitudinale principale X30, et des supports avant 33. Sur la figure 1, un support arrière principal 31a, deux supports arrière secondaires 31b disposés de part et d'autre du support arrière principal 31a, et quatre supports avant 33 sont représentés.

En variante non représentée, les supports arrière secondaires 31b sont disposés du même côté du support arrière principal 31a selon la direction longitudinale principale X30. Bien entendu, le dispositif de distribution 30 peut comprendre en variante plusieurs supports arrière principaux 31a et un ou plusieurs supports arrières secondaires 31b, qui sont par exemple disposés de part et d'autre de chaque support arrière principal 31a. Avantageusement, les supports arrière principaux 31a sont similaires les uns aux autres.

Les supports arrière 31a, 31b et avant 33 sont réalisés en un matériau électriquement isolant, par exemple en polymère synthétique.

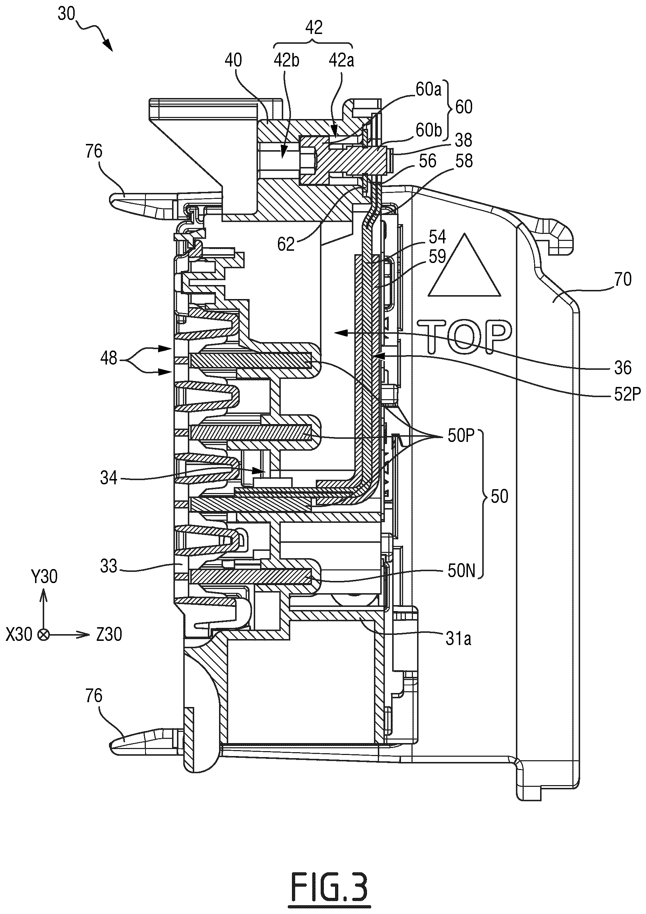

Le support arrière principal 31a comprend avantageusement au moins une encoche 34, et au moins un logement 36, visibles à la figure 3. Dans l'exemple des figures, le support arrière principal 31a comprend quatre encoches 34, l'une d'entre elles étant visible à la figure 3. Chaque encoche 34 est traversante selon la direction de profondeur Z30. Les encoches 34 présentent une forme allongée parallèlement à la direction longitudinale X30.

Dans l'exemple des figures, le support arrière principal 31a comprend quatre logements 36. Les logements 36 sont disposés de sorte qu'une des encoches 34 débouche dans chaque logement 36.

Lorsque l'ensemble de distribution 20 est en fonctionnement normal, les logements 36 sont tournés vers le fond 14, et notamment, chaque logement 36 est en regard de l'une des barres d'alimentation de phase 19P ou de neutre 19N selon la direction de profondeur Z30.

Chaque logement 36 comprend des griffes 38, qui s'étendent à partir de chaque logement 36 selon la direction de profondeur Z30, et sont recourbées à leur extrémité libre.

Le support arrière principal 31a comprend avantageusement au moins un fût de guidage 40, dans l'exemple des figures, quatre fûts de guidage 40, visibles à la figure 1. Chaque fût de guidage 40 s'étend selon la direction de profondeur Z30, et comprend un orifice traversant 42. Chaque orifice traversant 42 est avantageusement formé d'une partie principale 42a et d'une partie de vissage 42b, la partie principale 42a étant de diamètre supérieur à celui de la partie 42b. Les deux parties 42a et 42b sont coaxiales et parallèles à la direction de profondeur Z30. Chaque orifice traversant 42, plus précisément, la partie principale 42a de chaque orifice traversant 42 débouche dans l'un des logements 36, et la partie de vissage 42b de chaque orifice traversant 42 débouche du côté opposé aux logements 36.

Les supports arrière secondaires 31b sont avantageusement fixés au rail 16, en étant montés sur le rail 16 par exemple via des organes de retenue, non représentés, disposés dans des logements de retenue 45, et des ergots de maintien 46. Le maintien du support arrière principal 31a est assuré par la coopération entre le support arrière principal 31a et les supports arrière secondaires 31b. En particulier, les supports arrière principal 31a et secondaires 31b sont avantageusement fixés les uns aux autres, par exemple via des organes qui coopèrent par coopération de forme. Avantageusement, les organes sont des pions de centrage et des doigts, non représentés, qui coopèrent respectivement avec les doigts et les pions de centrage sur le support arrière 31a ou 31b immédiatement suivant, parallèlement à la direction longitudinale X30. Il est ainsi possible de fixer les supports arrière 31a et 31b entre eux en effectuant un mouvement parallèle à la direction longitudinale X30.

Chaque support avant 33 comprend des orifices traversants 48, organisés en rangées selon les directions longitudinale X30 et transversale Y30, ainsi que visibles sur la figure 1.

Chaque support avant 33 est monté sur l'un des supports arrière 31a, 31b, par exemple par complémentarité de formes avec le support arrière 31a, 31b. Deux supports avant 33 sont par exemple montés sur le support arrière principal 31a, et un support avant 33 est monté sur chaque support arrière secondaire 31b, ainsi que visible à la figure 1. Les supports avant 33 sont montés sur un côté du support arrière principal 31a opposé à celui des logements 36. Ainsi, lorsque l'ensemble de distribution 20 est en fonctionnement normal, chaque support avant 33 est visible et accessible par un utilisateur. Autrement dit les supports avant 33 sont orientés vers « l'avant », à l'opposé du fond 14, lorsque les supports arrière 31a, 31b sont fixés au fond 14, contrairement aux logements 36, qui sont tournés vers le fond 14.

Le dispositif de distribution 30 comprend également un bus de puissance 50, comprenant au moins une barre de phase 50P s'étendant parallèlement à la direction longitudinale X30. Avantageusement, le bus de puissance 50 comprend trois barres de phase 50P, qui s'étendent selon la direction longitudinale X30 et qui sont disposées parallèlement les unes aux autres selon la direction transversale Y30. En variante non représentée, le bus de puissance 50 comprend plus de trois barres de phase 50P.

Avantageusement, et ainsi que visible sur la figure 3, le bus de puissance 50 comprend une barre de neutre 50N, disposée parallèlement aux barres de phase 50P, les barres de phase 50P étant disposées par-delà la barre de neutre 50N selon la direction transversale Y30.

Les barres du bus de puissance 50 sont des parallélépipèdes rectangles, dont la plus petite dimension est mesurée selon la direction transversale Y30, ainsi que visible sur la figure 3.

Les barres 50P et 50N sont en matériau électriquement conducteur, par exemple en cuivre.

Chaque barre 50P, 50N du bus de puissance 50 est insérée dans les supports arrière principaux 31a et secondaires 31b, ainsi que visible à la figure 3, et recouverte par les supports avant 33 selon la direction de profondeur Z30.

Le dispositif de distribution 30 comprend, en outre, au moins un connecteur. Dans l'exemple des figures, le dispositif de distribution 30 comprend trois connecteurs de phase 52P et un connecteur de neutre 52N, disposés selon la direction transversale Y30.

Chaque connecteur 52P, 52N comprend avantageusement une pluralité de feuilles métalliques, par exemple en cuivre, superposées les unes sur les autres selon la direction de profondeur Z30.

Chaque connecteur 52P, 52N comprend avantageusement une partie principale 54, une extrémité de connexion 56 et une partie de jonction 58. En particulier, la partie principale 54, l'extrémité de connexion 56 et la partie de jonction 58 sont formées à partir de la pluralité de feuilles métalliques, et sont donc par exemple en cuivre.

Avantageusement, chaque connecteur 52P, 52N comprend en outre une gaine 59 isolante électriquement, par exemple en polychlorure de vinyle, ou PVC. La gaine 59 recouvre la partie principale 54, et laisse dénudées l'extrémité de connexion 56 et la partie de jonction 58.

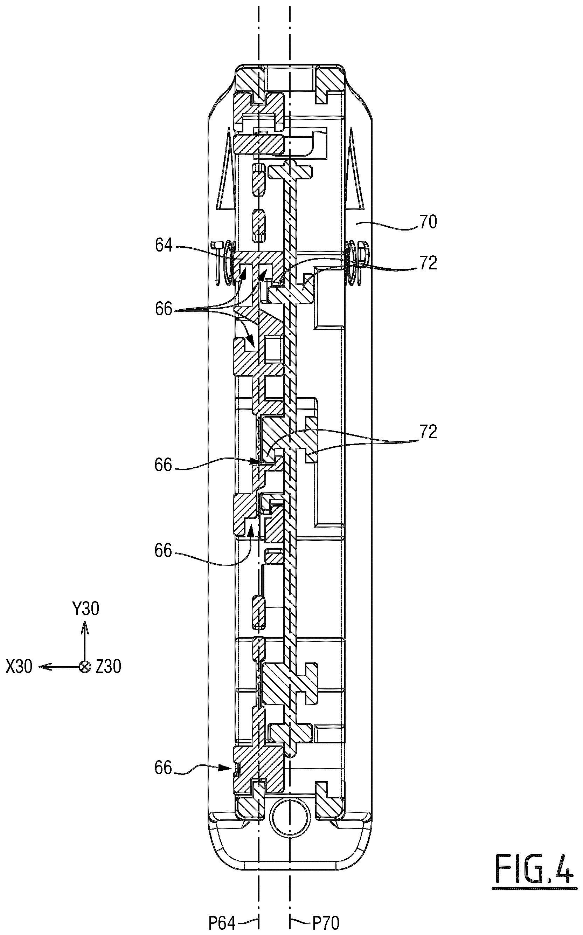

Avantageusement, la partie de jonction 58 comprend un soyage, de sorte que l'extrémité de connexion 56 et la partie principale 54 sont décalées selon la direction de profondeur Z30 l'une par rapport à l'autre, ainsi que visible aux figures 3 et 4.

Comme montré pour le connecteur 52P de la phase L1 à la figure 3, chaque connecteur 52P, 52N est connecté électriquement à l'une des barres de phase 50P ou de neutre 50N, en étant fixé à l'une des barres de phase 50P ou de neutre 50N. En particulier, le connecteur de neutre 52N est fixé à la barre de neutre 50N, et les connecteurs de phase 52P sont chacun connectés à l'une des barres de phase 50P.

Chaque connecteur 52P, 52N traverse l'une des encoches 34, et la partie principale 54, l'extrémité de connexion 56 et la partie de jonction 58 sont reçues dans le logement 36 dans lequel débouche l'encoche 34. Chaque extrémité de connexion 56 est ainsi en regard de l'un des fûts de guidage 40, en particulier, pour chaque fût de guidage 40, la partie principale 42a débouche sur l'une des extrémités de connexion 56. Chaque extrémité de connexion 56 est configurée pour se débattre parallèlement à la direction de profondeur Z30. Le débattement de chaque extrémité de connexion 56 est léger, c'est-à-dire de l'ordre de quelques millimètres, par exemple compris entre 1 et 5mm, par exemple 3mm, et chaque extrémité de connexion 56 est retenue selon la direction de profondeur Z30 par les griffes 38.

Lorsque l'ensemble de distribution 20 est dans une configuration normale de fonctionnement, les connecteurs 52P sont en contact direct chacun avec l'une des barres d'alimentation de phase 19P et le connecteur de neutre 52N est en contact direct avec la barre d'alimentation de neutre 19N. Ainsi, les connecteurs de phase 52P connectent électriquement chaque barre de phase 50P à l'une des barre(s) d'alimentation 19P et le connecteur de neutre 52N connecte électriquement la barre de neutre 50N à la barre d'alimentation 19N. En particulier, aucun câble n'est nécessaire pour connecter électriquement les barres de phase 50P aux barres d'alimentation de phase 19P et la barre de neutre 50N à la barre d'alimentation de neutre 19N.

Ainsi, lorsque l'ensemble de distribution 20 est dans une configuration normale de fonctionnement, le dispositif de distribution 30 est connecté électriquement aux barres d'alimentation de phase 19P et à la barre d'alimentation de neutre 19N.

Afin de réaliser la connexion électrique entre les barres d'alimentation 19P, 19N et les connecteurs 52P, 52N, les connecteurs 52P, 52N sont fixés aux barres d'alimentation 19P, 19N. En particulier, le connecteur de neutre 52N est maintenu en contact direct avec la barre d'alimentation de neutre 19N. A cet effet, le dispositif de distribution 30 comprend avantageusement des vis 60, une vis 60 étant insérée dans chaque orifice débouchant 42. En particulier, une tête 60a de chaque vis 60 est insérée dans la partie principale 42a, et un corps 60b de chaque vis 60 traverse la partie principale 42a et la partie de vissage 42b, et traverse l'une des extrémités de connexion 56. Puisque le diamètre de la partie de vissage 42b est inférieur à celui de la partie principale 42a, la vis 60 ne peut pas s'échapper, et est ainsi imperdable. La tête 60a est accessible à travers la partie de vissage 42b, notamment afin de visser et de dévisser la vis 60, et donc de fixer l'extrémité de connexion 56 à la barre d'alimentation 19P ou 19N qui est en regard de celle-ci. Avantageusement, le dispositif de distribution 30 comprend en outre des rondelles 62, une rondelle 62 étant enfilée sur chaque vis 60, la rondelle 62 étant disposée entre la tête 60a et l'extrémité de connexion 56 selon la direction de profondeur Z30.

Le soyage de la partie de jonction 58, ainsi que le léger débattement des connecteurs 52P, 52N parallèlement à la direction de profondeur Z30 permettent de compenser une éventuelle variation d'épaisseur du logement 36 et de tenir compte d'une distance variable entre l'extrémité de connexion 56 et la barre d'alimentation 19P ou 19N à laquelle elle doit être fixée. Cela permet notamment d'assurer un appui-plan satisfaisant de l'extrémité de connexion 56 sur la barre 19P ou 19N à laquelle elle est fixée, et donc d'assurer une connexion électrique optimale.

En variante non représentée, le dispositif de distribution 30 comprend au moins un capot, chaque capot recouvrant l'extrémité de connexion 56 de l'un des connecteurs 52P, 52N. Chaque capot est distinct du support arrière principal 31a, est solidaire de l'un des connecteurs 52P, 52N, et est monté coulissant sur le support arrière principal 31a, de sorte à pouvoir accompagner un mouvement de l'extrémité de connexion 56. Les fûts de guidage 40 sont alors formés dans chacun des capots, afin d'accueillir la vis 60, et de la rendre imperdable, de manière similaire à ce qui a été décrit précédemment.

Le dispositif de distribution 30 comprend avantageusement deux garnitures 64, disposées de part et d'autre de l'ensemble formé par les supports arrière 31a, 31b selon la direction longitudinale X30. Les garnitures 64 sont en matériau isolant électriquement, par exemple en polymère synthétique.

Les garnitures 64 définissent chacune un plan médian P64, qui, lorsqu'elles sont fixées sur les supports arrière 31a, 31b, par exemple les supports arrière secondaires 31b, est perpendiculaire à la direction longitudinale X30.

Les garnitures 64 sont montées sur les supports arrière secondaires 31b en étant encliquetées sur les supports arrière secondaires 31b, de sorte à bloquer l'accès aux barres de phase 50P et à la barre de neutre 50N, accès qui se ferait parallèlement à la direction longitudinale. Autrement dit, les garnitures 64 empêchent d'accéder aux extrémités des barres de phase 50P et de neutre 50N.

Avantageusement, chaque garniture 64 est montée sur l'un des supports arrière secondaires 31b par un mouvement effectué selon la direction de profondeur Z30.

Les garnitures 64 comprennent des glissières 66, visibles à la figure 4. Des rebords du support arrière secondaire 31b sont engagées dans une partie des glissières 66. Les garnitures 64 comprennent avantageusement un ergot de verrouillage, non visible sur les figures, qui est encliqueté sur le support arrière secondaire 31b, et empêche ainsi que les garnitures 64 soient retirées du support par un mouvement opposé à la direction de profondeur Z30.

Le dispositif de distribution 30 comprend avantageusement deux supports latéraux 70, en matériau isolant électriquement, comme par exemple en polymère synthétique.

Les supports latéraux sont fixés chacun à l'une des garnitures 64 par coopération de formes. A cet effet, les supports latéraux 70 comprennent chacun des rebords 72, qui coopèrent avec une autre partie des glissières 66.

Chaque support latéral 70 comprend un plan médian P70 qui, lorsque l'ensemble de distribution 20 est en configuration normale de fonctionnement, est perpendiculaire à la direction longitudinale X30.

Les supports latéraux 70 sont avantageusement fixés sur les rails 18, de sorte à ce que le dispositif de distribution 30 soit fixé sur le fond 14.

Chaque support latéral 70 comprend un doigt de verrouillage 76, visible sur les figures 1 et 3, qui coopère avec l'une des garnitures 64 pour verrouiller cette garniture 64, assurant le verrouillage des supports latéraux 70 au reste du dispositif de distribution 30, qui est alors fixé au coffre 12.

Avantageusement, les garnitures 64 sont symétriques par rapport à leur plan médian P64, ou, en variante, les glissières 66 d'une garniture 64 sont symétriques par rapport au plan médian P64 de cette garniture 64. De manière similaire, les supports latéraux 70, ou les rebords 72 des supports latéraux 70 sont symétriques par rapport à leur plan médian P70. Ainsi, des garnitures 64 et des supports latéraux 70 identiques sont utilisés dans le dispositif de distribution 30.

En variante non représentée, dans le cas où le dispositif de distribution 30 ne comprend pas de supports arrière secondaires 31b, mais seulement un support arrière principal 31a, les garnitures 64 sont montées de part et d'autre du support arrière principal 31a. Le principe de fixation est identique à ce qui a été décrit précédemment pour les supports arrière secondaires 31b.

En variante non représentée, dans le cas où l'ensemble de distribution 20, en configuration normale de fonctionnement, est vertical, c'est-à-dire que la direction longitudinale X30 est parallèle à la direction de hauteur H10, le dispositif de distribution 30 ne comprend pas de supports 70.

Le dispositif de protection électrique 22 est monté sur le dispositif de distribution 30, par exemple par coopération de formes entre le dispositif de protection électrique 22 et les supports avant 33 ou arrière principal 31a ou secondaire 31b.

Le dispositif de connexion électrique 22 est connecté électriquement au moins à l'une des barres de phase 50P et à la charge électrique, qui consomme de l'électricité. Le dispositif de protection électrique 22 est directement connecté au moins à l'une des barres de phase 50P, et dans l'exemple de la figure 1, est directement connecté à l'une des barres de phase 50P et à la barre de neutre 50N, pour connecter électriquement l'une des barres de phase 50P et la barre de neutre 50N au dispositif de protection électrique 22. Par « directement connecté », on entend que la connexion électrique est réalisée par contact direct, et notamment, sans utiliser de câbles reliant la barre de phase 50P et le dispositif de protection électrique 22 d'une part, et la barre de neutre 50N et le dispositif de protection électrique 22 d'autre part.

Dans l'exemple de la figure 1, le dispositif de protection électrique 22 comprend des connecteurs 80, électriquement conducteurs, qui traversent les orifices traversants 48 et qui sont en contact avec les barres 50P et 50N, par exemple en pinçant les barres 50P et 50N afin d'assurer la connexion électrique entre les barres de phase 50P et de neutre 50N et le dispositif de protection électrique 22. Notamment, le dispositif de connexion électrique 22 peut être monté tout le long du dispositif de distribution 30, y compris en regard des connecteurs 52P et 52N selon la direction de profondeur Z30.

Ainsi, lorsque l'ensemble de distribution 20 est en fonctionnement normal, il connecte électriquement la source de puissance et la charge électrique, via les barres d'alimentation 19P, 19N, les connecteurs 52P, 52N, les barres de phase 50P et de neutre 50N et le dispositif de protection électrique 22.

En variantes non représentées, le dispositif de connexion électrique 22 est directement connecté à une unique barre de phase, ou à plusieurs barres de phase sans être connecté à la barre de neutre.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Dispositif de distribution de courant électrique (30) pour une armoire électrique (10), configuré pour être connecté électriquement à au moins une barre d'alimentation de phase (19P), le dispositif de distribution (30) comprenant :
- un support arrière principal (31a);
- un support avant (33);
- un bus de puissance (50), comprenant au moins une barre de phase (50P) s'étendant selon une direction longitudinale (X30), la ou chaque barre de phase (50P) étant insérée dans le support arrière principal (31a) et la ou chaque barre de phase (50P) étant recouverte par le support avant (33) selon une direction de profondeur (Z30) ;
**caractérisé en ce que** le dispositif de distribution (30) comprend :
- au moins un connecteur de phase (52P), le ou chaque connecteur de phase (52P) étant disposé selon une direction transversale (Y30), le ou chaque connecteur de phase (52P) étant fixé à la, ou avec respectivement l'une des, barre(s) de phase (50P), le ou chaque connecteur de phase (52P) étant configuré pour être en contact direct avec la, ou avec respectivement l'une des, barre(s) d'alimentation de phase (19P), pour connecter électriquement la ou chaque barre de phase (50P) à la ou l'une des barre(s) d'alimentation de phase (19P),
et **en ce que** le dispositif de distribution (30) est configuré pour qu'un dispositif de protection électrique (22) soit monté sur le dispositif de distribution (30) et connecté directement à la ou l'une des barre(s) de phase (50P) pour connecter électriquement la ou l'une des barre(s) de phase (50P) au dispositif de protection électrique (22).

2. Dispositif de distribution (30) selon la revendication 1, configuré pour être connecté électriquement à une pluralité de barres d'alimentation de phase (19P) et à une barre d'alimentation de neutre (19N), dans lequel le bus de puissance (50) comprend :
- une pluralité de barres de phases (50P) et une barre de neutre (50N), s'étendant selon la direction longitudinale (X30), et disposées parallèlement les unes aux autres selon la direction transversale (Y30), et
- une pluralité de connecteurs de phase (52P) et un connecteur de neutre (52N), chaque connecteur (52P, 52N) étant disposé selon la direction transversale (Y30), chaque connecteur de phase (52P) étant fixé à l'une des barres de phase (50P) et le connecteur de neutre (52N) étant fixé à la barre de neutre (50N), chaque connecteur de phase (52P) étant configuré pour être en contact direct avec l'une des barres d'alimentation de phase (19P) pour connecter électriquement chaque barre de phase (50P) à l'une des barres d'alimentation de phase (19P), le connecteur de neutre (52N) étant configuré pour être maintenu en contact direct avec la barre d'alimentation de neutre (19N), par exemple par une vis (60), pour connecter électriquement la barre de neutre (50N) à la barre d'alimentation de neutre (19N).

3. Dispositif de distribution (30) selon l'une quelconque des revendications précédentes, dans lequel le ou chaque connecteur de phase (52P) comprend une pluralité de feuilles métalliques superposées les unes sur les autres selon la direction de profondeur (Z30).

4. Dispositif de distribution selon l'une quelconque des revendications précédentes, dans lequel le ou chaque connecteur de phase (52P) comprend une partie principale (54) recouverte d'une gaine (59) isolante électriquement, une extrémité de connexion (56), dénudée, et une partie de jonction (58), dénudée, la partie de jonction (58) reliant la partie principale (54) et l'extrémité de connexion (56) et comprenant un soyage, de sorte que l'extrémité de connexion (56) et la partie principale (54) sont décalées, selon la direction de profondeur (Z30), l'une par rapport à l'autre.

5. Dispositif de distribution (30) selon l'une quelconque des revendications précédentes, dans lequel le support arrière principal (31a) comprend au moins une encoche (34), la ou chaque encoche (34) étant traversée par le ou par l'un des connecteur(s) de phase (52P), et au moins un logement (36), dans lequel sont reçus la partie principale (54), l'extrémité de connexion (56) et la partie de jonction (58) du ou de l'un des connecteur(s) de phase (52P).

6. Dispositif de distribution (30) selon la revendication 5, dans lequel le ou chaque logement (36) comprend des griffes (38), s'étendant dans la direction de profondeur (Z30), et configurées pour retenir le ou chaque connecteur de phase (52P) dans la direction de profondeur (Z30).

7. Dispositif de distribution (30) selon l'une quelconque des revendications 1 à 5, dans lequel le support arrière principal (31a) comprend au moins un fût de guidage (40) s'étendant selon la direction de profondeur (Z30), le fût de guidage (40) comprenant un orifice traversant (42), qui comprend une partie principale (42a) débouchant sur le ou l'un des connecteurs de phase (52P), et dans lequel le dispositif de distribution (30) comprend au moins une vis (60), comprenant une tête (60a) insérée dans la partie principale (42a), et un corps (60b) traversant la partie principale (42a) et l'extrémité de connexion (56), afin de fixer l'extrémité de connexion (56) à la barre d'alimentation de phase (19P).

8. Dispositif de distribution (30) selon l'une quelconque des revendications précédentes, comprenant :
- des supports arrière secondaires (31b), disposés de part et d'autre du support arrière principal (31a) selon la direction longitudinale (X30), la ou chaque barre de phase (50P) étant en outre insérée dans les supports arrière secondaires (31b), et
- deux garnitures (64), disposées de part et d'autre des supports arrière principal (31a) et secondaires (31b) selon la direction longitudinale (X30) de sorte à bloquer l'accès à la ou aux barres de phase (50P) parallèlement à la direction longitudinale (X30).

9. Dispositif de distribution (30) selon la revendication 8, comprenant deux supports latéraux (70), chaque support latéral (70) étant fixé à l'une des garnitures (64) par coopération de formes, les supports latéraux (70) étant configurés pour être fixés sur un fond (14) d'un coffre (12) d'une armoire électrique (10).

10. Ensemble de distribution (20) comprenant un dispositif de distribution (30) de courant électrique selon l'une quelconque des revendications précédentes et au moins un dispositif de protection électrique (22), monté sur le dispositif de distribution de courant électrique (30) et connecté directement à la ou l'une des barre(s) de phase (50P), pour connecter électriquement la ou l'une des barre(s) d'alimentation de phase (19P) au dispositif de protection électrique (22).

11. Armoire électrique (10) comprenant :
- un coffre (12) délimitant une enceinte (V12) et présentant un fond ;
- au moins une barre d'alimentation de phase (19P), s'étendant dans l'enceinte (14), selon une direction de hauteur (H10) de l'armoire électrique (10) ; et
- un ensemble de distribution (20) selon la revendication 10, disposé dans l'enceinte (V12) et fixé sur le fond (14), le ou chaque connecteur de phase (52P) étant en contact direct avec la ou avec respectivement l'une des barre(s) d'alimentation de phase (19P), pour connecter électriquement la ou chaque barre de phase (50P) à la ou l'une des barre(s) d'alimentation de phase (19P).
